# FASCICULE DE BREVET EUROPEEN

(11) **EP 3 388 296 B1**
(45) Date de publication et mention de la délivrance du brevet: **24.02.2021**
(21) Numéro de dépôt: 18164994.8
(22) Date de dépôt: 29.03.2018
(51) Int. Cl.: B60T 1/00, B60K 25/02, B60K 25/06

(54) **DISPOSITIF POUR L'IMMOBILISATION D'UN VEHICULE**
VORRICHTUNG ZUR IMMOBILISIERUNG EINES FAHRZEUGS
DEVICE FOR IMMOBILISING A VEHICLE

(30) Priorité: 07.04.2017 FR 1753024
(43) Date de publication de la demande: 17.10.2018
(73) Titulaire: BAROCLEAN, Vendeuvre sur Barse (FR)
(72) Inventeur: PFISTER, Bernard, 54710 LUDRES (FR)
(74) Mandataire: Hugues, Catherine

(56) Documents cités:
- WO-A1-2009/017582
- WO-A1-2012/085613
- FR-A- 1 284 180
- US-A- 2 031 399

## Description

La présente invention a pour objet un dispositif pour l'immobilisation en position de travail d'un véhicule de type notamment camion hydrocureur pourvu d'au moins un équipement de travail relié à une boite de transfert présentant au moins un arbre d'entrée lié mécaniquement en entraînement à la boîte de vitesse du véhicule, un arbre de sortie primaire lié mécaniquement en entraînement au pont arrière du véhicule, au moins un arbre de sortie secondaire lié mécaniquement en entraînement audit équipement de travail, des moyens pour lier mécaniquement en entraînement ledit arbre d'entrée audit arbre de sortie primaire dans un état de circulation dudit véhicule ou audit arbre de sortie secondaire dans un état de travail dudit véhicule.

De manière classique, l'équipement dont est pourvu un véhicule de type camion hydrocureur est mû par la puissance du moteur transmise par la boîte de vitesse. Dans cet état de travail, le véhicule doit donc être bloqué en position pour en éviter tout déplacement intempestif, alors même qu'une vitesse est enclenchée. Jusqu'à présent, un tel blocage en position était réalisé via un système de freins à main solidaires des roues arrières du véhicule, dont on peut trouver une description dans la publication WO 2009/017582.

La présente invention a pour objet de fournir une nouvelle solution permettant le blocage en position d'un véhicule dans une position de travail indépendamment d'un tel système de freins à main solidaires de ses roues arrières et qui permette toujours le fonctionnement de la boîte de vitesse pour alimenter l'équipement.

A cet effet, la présente invention concerne un dispositif du genre indiqué en préambule, comportant un mécanisme destiné et conçu apte à bloquer en rotation ledit arbre de sortie primaire dans ledit état de travail dudit véhicule, ledit mécanisme étant caractérisé en ce qu'il comporte, s'étendant le long d'un axe X, un premier pignon à denture extérieure destiné à être monté en entraînement mécanique sur ledit arbre de sortie primaire, un second pignon à denture extérieure destiné à être relié fixement au carter de la boîte de transfert, ainsi qu'un troisième pignon à denture intérieure conçu apte à s'engrener sur lesdits premier et second pignons, ledit troisième pignon étant monté mobile en translation le long de l'axe X entre une position inactive dans laquelle il est en prise sur le second pignon et une position active dans laquelle il est en prise à la fois sur le premier et le second pignons.

Selon une caractéristique de l'invention, l'ensemble formé par les premier, second et troisième pignons est disposé dans un logement étanche relié à des moyens de commande pneumatique conçus aptes à provoquer le déplacement du troisième pignon de sa position inactive vers sa position active et réciproquement, et en ce que ledit mécanisme comporte des moyens de maintien dans sa position inactive ou active dudit troisième pignon.

Une autre caractéristique de l'invention est définie par le fait que le troisième pignon présente une face interne comportant deux zones latérales de diamètre interne d1 entre lesquelles s'étend ladite denture intérieure, une face externe de diamètre externe d2 pourvue de deux rainures annulaires, et deux faces latérales opposées comportant chacune une gorge annulaire.

Par ailleurs, conformément à une variante de réalisation, le logement étanche comporte :
- un cylindre externe de hauteur h0 supérieure à l'épaisseur e du troisième pignon et de diamètre interne d3 ajusté au diamètre externe d2 du troisième pignon,
- un couvercle de forme annulaire assemblé à un bord dudit cylindre externe, présentant une zone centrale bombée de hauteur h1 orientée vers l'intérieur du logement, et sur laquelle est fixé ledit second pignon,
- un cylindre interne bordant ladite zone centrale bombée dudit couvercle, présentant un diamètre externe d4 ajusté au diamètre interne d1 des zones latérales de la face interne du troisième pignon et une hauteur h2 correspondant à la hauteur h1 de ladite zone centrale bombée, et
- un flasque annulaire assemblé sur l'autre bord du cylindre externe et couplé à une bride de transmission portant ledit premier pignon.

L'invention se caractérise également en ce que les moyens de maintien dans sa position inactive ou active dudit troisième pignon comportent des moyens d'indexation tels qu'au moins un poussoir à ressort solidaire du cylindre externe et conçu apte à être engagé selon le cas dans l'une ou l'autre des rainures annulaires que comporte la face externe dudit troisième pignon.

D'autre part, les bords de la face externe et des zones latérales de la face interne du troisième pignon sont pourvues de joints toriques, contribuant à l'étanchéité dudit logement.

Une caractéristique additionnelle du dispositif selon l'invention est définie par le fait que les moyens de commande pneumatiques sont conçus aptes à injecter de l'air sous pression dans ledit logement étanche au travers d'un premier orifice formé dans ledit couvercle de manière telle qu'il débouche vers la gorge annulaire formée dans l'une des faces latérales du troisième pignon ou d'un second orifice formé dans ledit flasque de manière telle qu'il débouche vers la gorge annulaire formée dans la face latérale opposée du troisième pignon.

Egalement, il est avantageusement prévu d'équiper le dispositif selon l'invention de moyens de détection du placement dans sa position active dudit troisième pignon permettant notamment l'émission d'un signal d'avertissement à destination de l'opérateur.

D'autres caractéristiques et avantages de l'invention ressortiront de la description détaillée qui va suivre, se rapportant à un exemple de réalisation du dispositif selon l'invention donné uniquement à titre indicatif et non limitatif.

La compréhension de cette description sera facilitée en se référant aux dessins joints, dans lesquels :
- La figure 1 illustre une vue d'une boîte de transfert, d'un véhicule de type camion hydrocureur, équipée d'un dispositif selon l'invention,
- Les figures 2 et 3 sont des vues en perspective éclatée de la boîte de transfert de la figure 1 respectivement prises depuis sa face destinée à être reliée au pont arrière du véhicule et depuis sa face destinée à être reliée à la boîte de vitesse du véhicule, et
- Les figures 4 et 5 représentent des vues en coupe transversale de la boîte de transmission de la figure 1, dans lesquelles le troisième pignon que comporte le dispositif selon l'invention est respectivement dans son état inactif et dans son état actif.

La présente invention a pour objet un dispositif 1 pour immobiliser dans une position de travail, un véhicule de type notamment camion hydrocureur comportant au moins un équipement de travail relié à une boite de transfert 2. Cette dernière présente de manière classique au moins un arbre d'entrée 3 destiné à être lié mécaniquement en entraînement à la boîte de vitesse du véhicule, un arbre de sortie primaire 4 destiné à être lié mécaniquement en entraînement au pont arrière du véhicule et au moins un arbre de sortie secondaire destiné à être lié mécaniquement en entraînement audit équipement de travail.

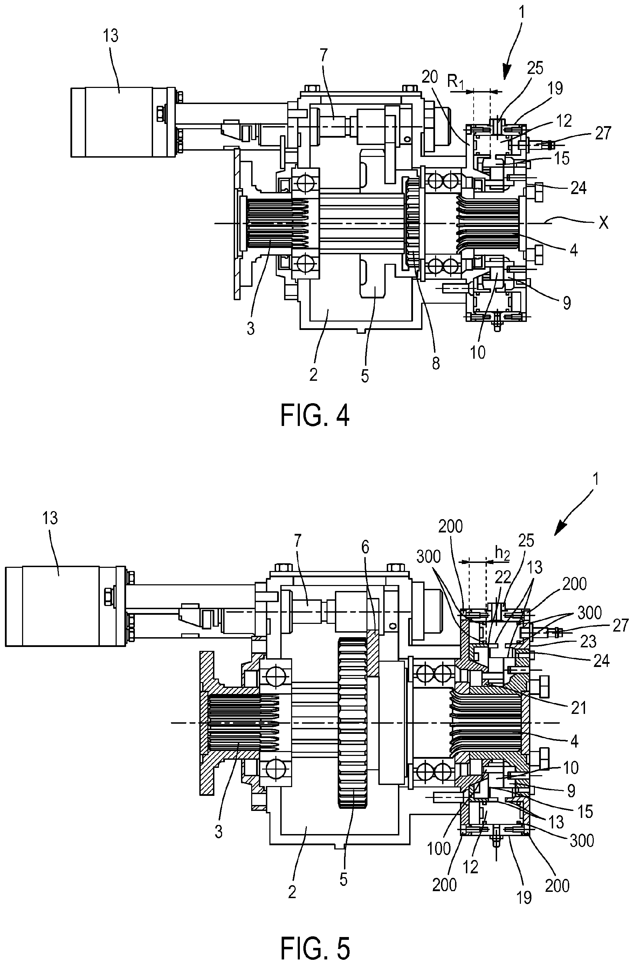

En référence aux figures 4 et 5, la boîte de transfert 2 héberge également une roue dentée 5 montée mobile en translation sur l'arbre d'entrée 3 et apte à adopter, sous l'effet d'une fourchette de transmission 6 actionnée par une tige de commande 7, une première position (figures 4 et 5) dans laquelle elle est en prise avec une roue dentée 8 reliée à l'arbre de sortie primaire 4.

Dans cette première position, correspondant à un état de « circulation » du véhicule, dans lequel celui-ci est apte à se déplacer sur un parcours, l'arbre de sortie primaire 4 est relié mécaniquement en entraînement à l'arbre d'entrée 3 et est donc apte à entraîner une rotation des roues arrière du véhicule sous l'effet d'une rotation de l'arbre d'entrée 3.

La roue dentée 5 peut également adopter une seconde position (non illustrée) dans laquelle elle est décalée vers la gauche, en considérant les figures 4 et 5, par rapport à la première position. Dans cette seconde position, la roue dentée 5 permet de relier mécaniquement en entraînement l'arbre d'entrée 3 à un arbre de sortie secondaire (non illustré) en vue du fonctionnement de l'équipement installé sur le véhicule. Toutefois, dans cette seconde position, correspondant à un état de « travail du véhicule », la roue dentée 5 n'est plus en prise avec la roue dentée 8 reliée à l'arbre de sortie primaire 4. Ce dernier n'est alors plus relié mécaniquement en entraînement à l'arbre d'entrée 3 et n'est donc plus lié à la boîte de vitesse du véhicule. Il est donc impératif, avant de procéder au déplacement de la roue dentée 5 de sa première vers sa seconde position, c'est à dire avant de désengrener les roues dentées 5 et 8, de mettre en œuvre un moyen de blocage des roues arrière du véhicule, afin d'éviter tout déplacement intempestif de celui-ci lors du fonctionnement de son équipement de travail.

A cet effet, la présente invention a prévu de mettre en œuvre un mécanisme destiné et conçu apte à bloquer en rotation l'arbre de sortie primaire 4 dans ledit état de travail dudit véhicule.

Ce mécanisme comporte, s'étendant le long d'un axe X, un premier pignon 9 à denture extérieure destiné à être monté en entraînement mécanique sur l'arbre de sortie primaire 4, un second pignon 10 à denture extérieure destiné à être relié fixement au carter 11 de la boîte de transfert 2, ainsi qu'un troisième pignon 12 à denture intérieure conçu apte à s'engrener sur lesdits premier et second pignons 9, 10, ledit troisième pignon 12 étant monté mobile en translation le long de l'axe X entre une position inactive dans laquelle il est en prise uniquement avec le second pignon 10 et une position active dans laquelle il est en prise à la fois avec le premier et le second pignons 9, 10.

Il convient de noter que des moyens de maintien dans sa position inactive ou active du troisième pignon 12 sont prévus qui seront décrits ci-après.

Par ailleurs, l'ensemble formé par les premier, second et troisième pignons 9, 10, 12 est disposé dans un logement étanche relié à un boîtier de commande pneumatique 13 comportant des moyens conçus aptes à provoquer le déplacement du troisième pignon 12 de sa position inactive vers sa position active et réciproquement.

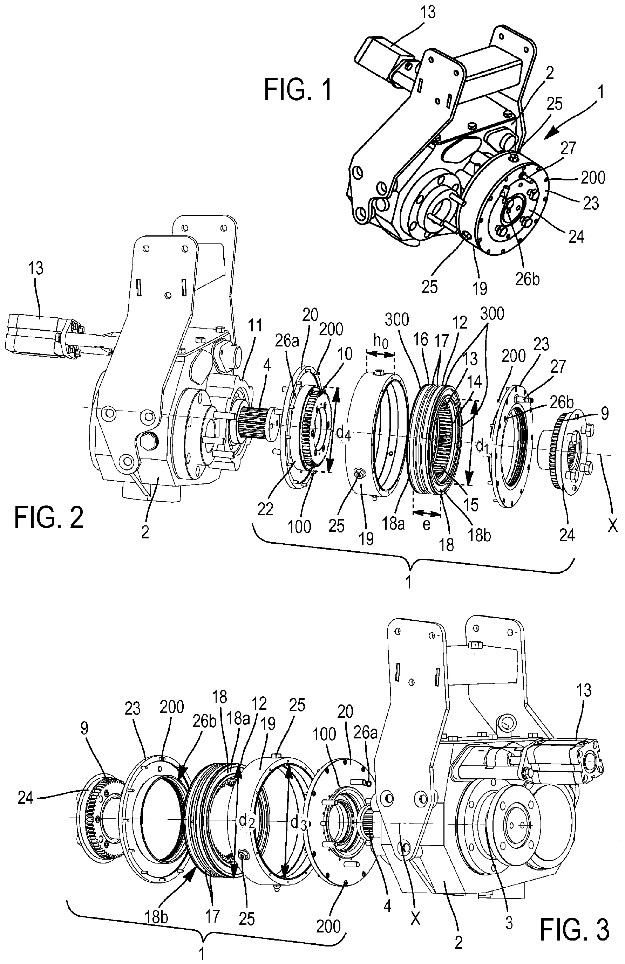

En fait, tel que visible en particulier sur les figures 2 et 3, le troisième pignon 12 présente une face interne comportant deux zones latérales 14 de diamètre interne d1 entre lesquelles s'étend ladite denture intérieure 15, une face externe 16 de diamètre externe d2 pourvue de deux rainures annulaires 17, et deux faces latérales opposées 18a, 18b comportant chacune une gorge annulaire 18. Par ailleurs, les bords de la face externe 16 et des zones latérales 14 de la face interne du troisième pignon 12 sont pourvues de joints toriques 300 permettant de contribuer à l'étanchéité du logement qui, dans la variante de réalisation illustrée, comporte :
- un cylindre externe 19 de hauteur h0 supérieure à l'épaisseur e du troisième pignon 12 et de diamètre interne d3 ajusté au diamètre externe d2 du troisième pignon 12,
- un couvercle 20 de forme annulaire assemblé par des vis 200 à un bord du cylindre externe 19, présentant une zone centrale bombée 21 de hauteur h1 orientée vers l'intérieur du logement, et sur laquelle est fixé le second pignon 10, au moyen de vis 100, ledit couvercle 20 étant lui-même destiné à être assemblé fixement au carter 11 de la boîte de transfert 2 par des moyens de solidarisation appropriés,
- un cylindre interne 22 bordant ladite zone centrale bombée 21 du couvercle 20, présentant un diamètre externe d4 ajusté au diamètre interne d1 des zones latérales 14 de la face interne du troisième pignon 12 et une hauteur h2 correspondant à la hauteur h1 de ladite zone centrale bombée 21, et
- un flasque annulaire 23 assemblé sur l'autre bord du cylindre externe 19 au moyen de vis 200 et couplé à une bride de transmission 24 portant le premier pignon 9.

Par ailleurs, les moyens de maintien dans sa position inactive ou active du troisième pignon 12 mentionnés ci-dessus comportent, dans la variante de réalisation illustrée, plusieurs poussoirs à ressort 25 solidaires du cylindre externe 19 et conçus aptes à être engagés selon le cas dans l'une ou l'autre des rainures annulaires 17 que comporte la face externe 16 du troisième pignon 12.

Il convient également de noter que les moyens de commande pneumatiques sont conçus aptes à injecter de l'air sous pression dans le logement étanche au travers d'un premier orifice 26a formé dans le couvercle 20 de manière telle qu'il débouche vers la gorge annulaire 18 formée dans l'une des faces latérales 18a du troisième pignon 12 ou d'un second orifice 26b formé dans ledit flasque 23 de manière telle qu'il débouche vers la gorge annulaire 18 formée dans la face latérale opposée 18b du troisième pignon 12.

Egalement, il est avantageusement prévu que le dispositif selon l'invention comporte un détecteur inductif 27 apte à repérer le placement dans sa position active du troisième pignon 12, et permettant de signaler à un opérateur, par exemple au moyen d'un voyant lumineux s'allumant sur le tableau de bord du véhicule, que cette position est atteinte.

Grâce à la structure qui vient d'être décrite, le pont arrière d'un véhicule peut être immobilisé au travers du blocage en rotation de la bride de transmission 24, se répercutant sur l'arbre de sortie primaire 4.

En effet, tel qu'illustré à la figure 4, dans la position inactive du troisième pignon 12, correspondant à un état dans lequel le véhicule peut circuler et les roues arrières sont soumises à l'action de la boîte de vitesse, ledit troisième pignon 12 est en prise uniquement avec le second pignon fixe 10, sa face latérale 18a est en appui contre la face interne du couvercle 20, et il est maintenu dans cette position sous l'effet des poussoirs à ressorts 25 logés dans une rainure annulaire 17 de sa face externe 16. Le premier pignon 9 est alors libre et est donc entraîné en rotation avec la bride de transmission 24 elle-même entraînée par l'arbre de sortie primaire 4, lorsque celui-ci est soumis à l'action de l'arbre d'entrée 3.

Lorsque l'opérateur en charge de manœuvrer l'équipement du véhicule veut mettre celui-ci en œuvre, il doit d'abord procéder au blocage en rotation de l'arbre de sortie primaire 4, au travers du blocage en rotation de la bride de transmission 24, afin d'éviter ensuite tout déplacement intempestif du véhicule.

Ce blocage en rotation de la bride de transmission 24 est obtenu via l'actionnement des moyens de commande pneumatique permettant une injection d'air sous pression dans le logement étanche, au travers de l'orifice 26a du couvercle 20. Cet air sous pression arrive dans la gorge annulaire 18 de la face latérale 18a du troisième pignon 12 et provoque alors le déplacement en translation le long de l'axe X de celui-ci en direction du premier pignon 9. La course du troisième pignon 12 s'achève lorsque sa face latérale opposée 18b arrive en appui contre la face interne du flasque annulaire 23 et que la gorge 18 de ladite face latérale 18b arrive au contact du détecteur inductif 27, permettant le déclenchement d'un signal d'avertissement à destination de l'opérateur.

Dans cette position, illustrée à la figure 5, le troisième pignon 12 est non seulement toujours en prise avec le second pignon fixe 10 mais également avec le premier pignon 9 dont la rotation autour de l'axe X devient alors impossible. Dès lors, la bride de transmission 24, solidaire du premier pignon 9 est également bloquée en rotation. L'opérateur peut alors opérer un désengrènement des roues dentées 5 et 8 en vue de pouvoir relier mécaniquement en entraînement l'arbre d'entrée primaire 3 à l'arbre de sortie secondaire et permettre le fonctionnement de l'équipement dans un état de travail du véhicule, sans courir le risque d'assister à un déplacement intempestif du véhicule.

Il convient de noter que les poussoirs à ressort 25 sont logés dans une rainure annulaire 17 de la face externe du troisième pignon 12 lorsque celui-ci est dans une position active ou inactive, et permettent d'éviter tout déplacement intempestif du troisième pignon 12 entre ces deux positions en l'absence de mise sous pression pneumatique du logement étanche.

Afin de débloquer la bride de transmission 24 et remettre le véhicule dans son état de circulation, à la fin de l'utilisation de l'équipement, l'opérateur procède d'abord aux opérations lui permettant de désolidariser l'arbre d'entrée primaire 3 et l'arbre de sortie secondaire et d'engrener les roues dentées 5 et 8 pour re-solidariser l'arbre d'entrée 3 et l'arbre de sortie primaire 4. Puis, il actionne les moyens de commande pneumatique pour injecter de l'air sous pression dans le logement étanche, au travers de l'orifice 26b du flasque 23. Cet air sous pression arrive dans la gorge annulaire de la face latérale 18b du troisième pignon 12 en appui contre le flasque 23 et provoque le déplacement en translation le long de l'axe X de ce dernier, en direction du couvercle 20. Lors de ce déplacement, les poussoirs à ressorts 25 sont expulsés de la rainure annulaire 17 dans laquelle ils sont logés pour s'engager en fin de course dans l'autre rainure annulaire 17 et contribuer à nouveau au blocage en position dudit troisième pignon 12.

En fin de course, ce dernier est en appui contre le couvercle 20, et en prise uniquement avec le second pignon 10. Le premier pignon 9 est libéré et n'empêche à présent plus la rotation de la bride de transmission 24 sous l'effet de la rotation de l'arbre de sortie primaire 4 entraîné par l'arbre d'entrée 3. Le pont arrière du véhicule, relié classiquement à la bride de transmission 24 par un cardan peut par conséquent à nouveau être mû via la boîte de vitesse.

## Revendications

1. Dispositif (1) pour l'immobilisation en position de travail d'un véhicule de type notamment camion hydrocureur pourvu d'au moins un équipement de travail relié à une boite de transfert (2) présentant au moins un arbre d'entrée (3) lié mécaniquement en entraînement à la boîte de vitesse du véhicule, un arbre de sortie primaire (4) lié mécaniquement en entraînement au pont arrière du véhicule, au moins un arbre de sortie secondaire lié mécaniquement en entraînement audit équipement de travail, des moyens pour lier mécaniquement en entraînement ledit arbre d'entrée (3) audit arbre de sortie primaire (4) dans un état de « circulation » dudit véhicule ou audit arbre de sortie secondaire dans un état de travail dudit véhicule, ledit dispositif (1) comportant un mécanisme destiné et conçu apte à bloquer en rotation ledit arbre de sortie primaire (4) dans ledit état de travail dudit véhicule, **caractérisé en ce que** ledit mécanisme comporte, s'étendant le long d'un axe X, un premier pignon (9) à denture extérieure destiné à être monté en entraînement mécanique sur ledit arbre de sortie primaire (4), un second pignon (10) à denture extérieure destiné à être relié fixement au carter (11) de la boîte de transfert (2), ainsi qu'un troisième pignon (12) à denture intérieure conçu apte à s'engrener sur lesdits premier et second pignons (9, 10), ledit troisième pignon (12) étant monté mobile en translation le long de l'axe X entre une position inactive dans laquelle il est en prise sur le second pignon (10) et une position active dans laquelle il est en prise à la fois sur le premier et le second pignons (9, 10).

2. Dispositif (1) selon la revendication 1, **caractérisé en ce que** l'ensemble formé par les premier, second et troisième pignons (9, 10, 12) est disposé dans un logement étanche relié à des moyens de commande pneumatique conçus aptes à provoquer le déplacement du troisième pignon (12) de sa position inactive vers sa position active et réciproquement, et **en ce que** ledit mécanisme comporte des moyens de maintien dans sa position inactive ou active dudit troisième pignon (12).

3. Dispositif (1) selon l'une quelconque des revendications 1 ou 2, **caractérisé en ce que** le troisième pignon (12) présente une face interne comportant deux zones latérales (14) de diamètre interne d1 entre lesquelles s'étend ladite denture intérieure (15), une face externe (16) de diamètre externe d2 pourvue de deux rainures annulaires (17), et deux faces latérales (18a, 18b) opposées comportant chacune une gorge annulaire (18).

4. Dispositif (1) selon la revendication 3, **caractérisé en ce que** ledit logement étanche comporte :
- un cylindre externe (19) de hauteur h0 supérieure à l'épaisseur e du troisième pignon (12) et de diamètre interne d3 ajusté au diamètre externe d2 du troisième pignon (12),
- un couvercle (20) de forme annulaire assemblé à un bord dudit cylindre externe (19), présentant une zone centrale bombée (21) de hauteur h1 orientée vers l'intérieur du logement étanche, et sur laquelle est fixé ledit second pignon (10),
- un cylindre interne (22) bordant ladite zone centrale bombée (21) dudit couvercle (20), présentant un diamètre externe d4 ajusté au diamètre interne d1 des zones latérales (14) de la face interne du troisième pignon (12) et une hauteur h2 correspondant à la hauteur h1 de ladite zone centrale bombée (21), et
- un flasque annulaire (23) assemblé sur l'autre bord du cylindre externe (19) et couplé à une bride de transmission (24) portant ledit premier pignon (9).

5. Dispositif (1) selon la revendication 4, **caractérisé en ce que** les moyens de maintien dans sa position inactive ou active dudit troisième pignon (12) comportent des moyens d'indexation tels qu'au moins un poussoir à ressort (25) solidaire du cylindre externe (19) et conçu apte à être engagé selon le cas dans l'une ou l'autre des rainures annulaires (17) que comporte la face externe (16) dudit troisième pignon (12).

6. Dispositif (1) selon l'une quelconque des revendications 3 à 5, **caractérisé en ce que** les bords de la face externe (16) et des zones latérales (14) de la face interne du troisième pignon (12) sont pourvues de joints toriques (300) .

7. Dispositif (1) selon l'une quelconque des revendications 4 à 6, **caractérisé en ce que** les moyens de commande pneumatiques sont conçus aptes à injecter de l'air sous pression dans ledit logement étanche au travers d'un premier orifice (26a) formé dans ledit couvercle (20) de manière telle qu'il débouche vers la gorge annulaire (18) formée dans l'une des faces latérales (18a) du troisième pignon (12) ou d'un second orifice (26b) formé dans ledit flasque (23) de manière telle qu'il débouche vers la gorge annulaire (18) formée dans la face latérale (18b) opposée du troisième pignon (12).

8. Dispositif (1) selon l'une quelconque des revendications précédentes, **caractérisé en ce qu'**il comporte des moyens de détection du placement dans sa position active dudit troisième pignon (12).

## Patentansprüche

1. Vorrichtung (1) zum Immobilisieren in der Arbeitsposition eines Fahrzeugs nämlich der Art Saug-Spülfahrzeug, das mit mindestens einer Arbeitsausrüstung ausgestattet ist, die mit einem Verteilergetriebe (2) verbunden ist, das mindestens eine mechanisch in Antrieb mit dem Fahrzeuggetriebe verbundene Eingangswelle (3), die eine mechanisch in Antrieb mit der Hinterachse des Fahrzeugs verbundene primäre Abtriebswelle (4), mindestens eine mechanisch in Antrieb mit der besagten Arbeitsausrüstung verbundene sekundäre Abtriebswelle, Mittel zur mechanischen Verbindung in Antrieb der besagten Eingangswelle (3) mit der besagten primären Ausgangswelle (4) in einem "Fahrzustand" des besagten Fahrzeugs oder mit der besagten sekundären Ausgangswelle in einem Arbeitszustand des besagten Fahrzeugs aufweist, wobei die besagte Vorrichtung (1) einen Mechanismus umfasst, der dazu bestimmt und ausgelegt ist, die besagte primäre Abtriebswelle (4) in dem besagten Arbeitszustand des besagten Fahrzeugs in Drehung zu sperren, **dadurch gekennzeichnet, dass** der besagte Mechanismus ein sich entlang einer X-Achse erstreckende erstes Ritzel (9) mit äußerer Verzahnung, das dazu bestimmt ist, mechanisch in Antrieb auf der besagten primären Abtriebswelle (4) montiert zu werden, ein zweites Ritzel (10) mit äußerer Verzahnung, das dazu bestimmt ist, fest mit dem Gehäuse (11) des Verteilergetriebes (2) verbunden zu werden, sowie ein drittes Ritzel (12) mit innerer Verzahnung, das geeignet ausgelegt ist, um auf dem ersten und dem zweiten Ritzel (9, 10) in Eingriff zu gehen, umfasst, wobei das besagte dritte Ritzel (12) translationsbeweglich entlang der X-Achse zwischen einer inaktiven Position, in der es mit dem zweiten Ritzel (10) in Eingriff steht, und einer aktive Position, in der es sowohl mit dem ersten als auch mit dem zweiten Ritzel (9, 10) in Eingriff steht, montiert ist.

2. Vorrichtung (1) nach Anspruch 1, **dadurch gekennzeichnet, dass** die durch die erste, zweite und dritte Ritzel (9, 10, 12) gebildete Einheit in einem abgedichteten Gehäuse angeordnet ist, das mit pneumatischen Steuermitteln verbunden ist, die geeignet ausgelegt sind, um die Bewegung des dritten Ritzels (12) aus seiner inaktiven Position in seine aktive Position, und umgekehrt, zu bewirken, und dadurch, dass der besagte Mechanismus Mittel zum Halten des besagten dritten Ritzels (12) in seiner inaktiven oder aktiven Position umfasst.

3. Vorrichtung (1) nach irgendeinem der Ansprüche 1 oder 2, **dadurch gekennzeichnet, dass** das dritte Ritzel (12) eine Innenfläche aufweist, die zwei seitliche Bereiche (14) mit einem inneren Durchmesser d1 umfasst, zwischen denen sich die besagte innere Verzahnung (15) erstreckt, eine Außenfläche (16) mit einem äußeren Durchmesser d2, die mit zwei Ringnuten (17) versehen ist, und zwei gegenüberliegenden Seitenflächen (18a; 18b), die jeweils eine Ringnut (18) umfassen.

4. Vorrichtung (1) nach Anspruch 3, **dadurch gekennzeichnet, dass** das besagte abgedichtete Gehäuse Folgendes umfasst:
- einen äußeren Zylinder (19) mit einer Höhe h0, die größer als die Dicke e des dritten Ritzels (12) ist, und mit einem inneren Durchmesser d3, der dem äußeren Durchmesser d2 des dritten Ritzels (12) angespasst ist;
- einen ringförmigen Deckel (20), der mit einem Rand des besagten äußeren Zylinders (19) zusammengefügt ist und einen gewölbten zentralen Bereich (21) mit einer Höhe h1 aufweist, der zur Innenseite des abgedichteten Gehäuses ausgerichtet ist und an dem das besagte zweite Ritzel (10) befestigt ist,
- einen inneren Zylinder (22), der an den besagten gewölbten zentralen Bereich (21) des besagten Deckels (20) angrenzt, der einen äußeren Durchmesser d4, der dem inneren Durchmesser d1 der seitlichen Bereiche (14) der Innenfläche des dritten Ritzels (12) angepasst ist, und eine Höhe h2, die der Höhe h1 des besagten gewölbten zentralen Bereichs (21) entspricht, aufweist, und
- einen Ringflansch (23), der mit dem anderen Rand des äußeren Zylinders (19) zusammengefügt und mit einem Übertragungsflansch (24) verbunden ist, der das besagte erste Ritzel (9) trägt.

5. Vorrichtung (1) nach Anspruch 4, **dadurch gekennzeichnet, dass** die Mittel zum Halten des besagten dritten Ritzels (12) in seiner inaktiven oder aktiven Position Indexierungsmittel, wie mindestens einen Federkolben (25), umfassen, der fest mit dem äußeren Zylinder (19) verbunden und geeignet ausgelegt ist, um je nach dem Fall in die eine oder die andere der Ringnuten (17), welche die Außenfläche (16) des besagten dritten Ritzels (12) umfasst, eingeführt zu werden.

6. Vorrichtung (1) nach irgendeinem der Ansprüche 3 bis 5, **dadurch gekennzeichnet, dass** die Ränder der Außenfläche (16) und der seitlichen Bereiche (14) der Innenfläche des dritten Ritzels (12) mit O-Ringen (300) versehen sind.

7. Vorrichtung (1) nach irgendeinem der Ansprüche 4 bis 6, **dadurch gekennzeichnet, dass** die pneumatischen Steuermittel geeignet ausgelegt sind, um Druckluft in das besagte abgedichtete Gehäuse durch ein erstes Loch (26a) hindurch, das so im besagten Deckel (20) gebildet ist, dass es in Richtung der Ringnut (18) endet, die in einer der Seitenflächen (18a) des dritten Ritzels (12) gebildet ist, oder durch ein zweites Loch (26b) hindurch, das so in dem besagten Flansch (23) gebildet ist, dass es in Richtung der Ringnut (18) endet, die in der gegenüberliegenden Seitenfläche (18b) des dritten Ritzels (12) gebildet ist, einzuspritzen.

8. Vorrichtung (1) nach irgendeinem der vorhergehenden Ansprüche, **dadurch gekennzeichnet, dass** sie Mittel zum Erfassen der Platzierung des besagten dritten Ritzels (12) in seiner aktiven Position umfasst.

## Claims

1. Device (1) for immobilizing in working position a vehicle, namely such as a sewer-cleaning truck, provided with at least one working equipment connected to a transfer box (2) having at least one input shaft (3) mechanically connected in drive to the gearbox of the vehicle, a primary output shaft (4) mechanically connected in drive to the rear axle of the vehicle, at least one secondary output shaft mechanically connected in drive to said working equipment, means for mechanically connecting in drive said input shaft (3) to said primary output shaft (4) in a "running" state of said vehicle or to said secondary output shaft in a working state of said vehicle, said device (1) including a mechanism intended and designed to lock in rotation said primary output shaft (4) in said working state of said vehicle, wherein said mechanism includes, extending along an X axis, a first pinion (9) with an external toothing intended to be mounted in mechanical drive on said primary output shaft (4), a second pinion (10) with an external toothing intended to be firmly connected to the casing (11) of the transfer case (2), as well as a third pinion (12) with an internal toothing designed capable of meshing with said first and second pinions (9, 10), said third pinion (12) being mounted movable in translation along the X axis between an inactive position in which it is in engagement with the second pinion (10) and in an active position in which it is in engagement with both the first and the second pinion (9, 10).

2. Device (1) according to claim 1, wherein the assembly formed by the first, second and third pinions (9, 10, 12) is arranged in a sealed housing connected to pneumatic control means designed capable of causing the third pinion (12) to move from its inactive position to its active position and vice versa, and in that said mechanism includes means for maintaining said third pinion (12) in its inactive or active position.

3. Device (1) according to any one of claims 1 or 2, wherein the third pinion (12) has an internal face including two lateral areas (14) with an inner diameter d1 between which said internal toothing extends (15), an external face (16) with an outer diameter d2 provided with two annular grooves (17), and two opposite side faces (18a; 18b) each including an annular groove (18).

4. Device (1) according to claim 3, wherein said sealed housing includes:
- an outer cylinder (19) with a height h0 larger than the thickness e of the third pinion (12) and with an inner diameter d3 adjusted to the outer diameter d2 of the third pinion (12),
- a cover (20) having an annular shape assembled to one edge of said outer cylinder (19), having a curved central area (21) with a height h1 oriented towards the inside of the sealed housing, and to which said second pinion (10) is fastened,
- an inner cylinder (22) bordering said curved central area (21) of said cover (20), having an outer diameter d4 adjusted to the inner diameter d1 of the lateral areas (14) of the internal face of the third pinion (12) and a height h2 corresponding to the height h1 of said curved central area (21), and
- an annular flange (23) assembled with the other edge of the outer cylinder (19) and coupled to a transmission flange (24) carrying said first pinion (9).

5. Device (1) according to claim 4, wherein the means for holding said third pinion (12) in its inactive or active position include indexing means, such as at least one spring-driven pusher (25), integral with of the outer cylinder (19) and designed capable of being inserted, as the case may be, into either one of the annular grooves (17), which the outer face (16) of said third pinion (12) includes.

6. Device (1) according to any one of claims 3 to 5, wherein the edges of the outer face (16) and of the side areas (14) of the inner face of the third pinion (12) are provided with O-rings (300).

7. Device (1) according to any one of claims 4 to 6, wherein the pneumatic control means are designed capable of injecting pressurized air into said sealed housing through a first orifice (26a) formed in said cover (20) so that it opens towards the annular groove (18) formed in one of the side faces (18a) of the third pinion (12) or of a second orifice (26b) formed in said flange (23) so that it opens towards the annular groove (18) formed in the opposite side face (18b) of the third pinion (12).

8. Device (1) according to any one of the preceding claims, wherein it includes means for detecting the bringing in its active position of said third pinion (12).
